# FASCICULE DE BREVET EUROPEEN

(11) **EP 3 927 602 B1**
(45) Date de publication et mention de la délivrance du brevet: **10.01.2024**
(21) Numéro de dépôt: 20710580.0
(22) Date de dépôt: 13.02.2020
(51) Int. Cl.: B62D 35/02

(54) **DISPOSITIF D'HABILLAGE POUR VEHICULE**
VERKLEIDUNGSEINRICHTUNG EINES FAHRZEUGES
FAIRING ARRANGEMENT FOR A VEHICLE

(30) Priorité: 20.02.2019 FR 1901701
(43) Date de publication de la demande: 29.12.2021
(73) Titulaire: Stellantis Auto SAS, 78300 Poissy (FR)
(72) Inventeur: BERTH, Stephane, 92320 CHATILLON (FR)
(86) Numéro de dépôt international: PCT/FR2020/050273
(87) Numéro de publication internationale: WO 2020/169904

(56) Documents cités:
- FR-A1- 2 761 651
- FR-A1- 2 940 239
- FR-A1- 2 987 806
- JP-A- 2000 128 027
- JP-A- 2009 040 173

## Description

### DOMAINE TECHNIQUE

La présente invention revendique la priorité de la demande française 1901701 déposée le 20 février 2019.

La présente invention concerne le domaine des véhicules, en particulier celui des véhicules automobiles. L'invention se réfère plus spécifiquement à un dispositif d'habillage pour véhicule comprenant au moins une interface de fixation destinée à venir, en correspondance, se plaquer contre une autre interface de fixation solidaire du véhicule lors de l'assemblage de ce dispositif au véhicule. De préférence, ce dispositif d'habillage fait référence à un carénage de véhicule et plus spécifiquement encore à un déflecteur aéraulique destiné, par exemple, à être agencé sous le plancher du véhicule.

### ART ANTÉRIEUR

Il est connu dans l'art antérieur, notamment du document US 2010/0143695, un matériau de couverture d'un dessous de plancher d'automobile peu coûteux et dont le poids est réduit. Ce matériau de couverture de dessous de plancher est produit en réalisant un formage sous vide, un formage à la presse ou par pression d'air d'une feuille thermoplastique. Ce matériau est présenté sous une forme de caisson fixé au-dessous du plancher du véhicule. Pour ce faire, il comprend des rebords, ou pattes de fixation, ménagés sur le pourtour du caisson dans son plan de fixation. Ces pattes sont perforées de trous permettant le passage de vis de fixation.

Le document US 2011/0163570 décrit une protection aérodynamique inférieure pour véhicule, comportant une première partie amont fixée à la carrosserie sous le plancher à l'avant du véhicule, et une seconde partie aval montée en rotation comme la porte d'une trappe par rapport à la partie amont fixe. Cette partie aval vise à améliorer l'accessibilité lors d'un travail de maintenance du véhicule.

Le document DE102007002679 décrit une autre protection inférieure pour véhicule, notamment pour compartiment moteur dans lequel un réservoir d'huile est agencé.

Une ouverture de passage est ménagée dans la protection pour la ventilation du compartiment moteur. Cette ouverture présente en outre une nervure ou une sorte de bord tombé de rigidification sur son pourtour.

Le document FR2482548 divulgue un dispositif aérodynamique pouvant être monté sur un véhicule automobile. Fixé sous le véhicule, ce dispositif comprend un élément de carénage visant à faciliter l'écoulement de l'air sous le plancher du véhicule. Cet élément de carénage comporte un regard permettant l'accès à certains éléments du véhicule, tels qu'orifices de vidange, de graissage, de contrôle ou d'entretien. Ce regard est dépourvu de tout renforcement sur son pourtour. Le document JP 2009 040173 A divulgue un véhicule comprenant une interface de fixation entre un dispositif d'habillage et un élément de pare-chocs selon le préambule de la revendication 1. L'agencement d'éléments de carénage permet d'améliorer les propriétés aérodynamiques du véhicule et contribue également à la réduction de sa consommation de carburant ou d'énergie électrique. L'aménagement de regards ou autres ouvertures est souvent bénéfique pour pouvoir accéder à certaines parties demeurantes autrement inaccessibles sans déposer le carénage. Pour réduire davantage la consommation, les véhicules ont un intérêt à alléger au maximum leur poids. Or, de tels regards ou ouvertures constituent souvent des zones de faiblesse en termes de résistance mécanique du carénage, en particulier lorsque ce dernier est fin et est en plastique pour être aussi léger que possible. Pour cette raison, de telles ouvertures sont généralement renforcées dans leur pourtour par un bord tombé qui se présente sous la forme d'un rebord disposé perpendiculairement au plan de l'ouverture sur tout son périmètre. Pour ne pas entraver l'écoulement du flux d'air sous le carénage, ce rebord fait face au plancher du véhicule et non pas à la chaussée.

L'inconvénient d'un tel rebord de renforcement réside dans le fait qu'il constitue une saillie susceptible de venir buter contre toute sorte d'éléments du véhicule, notamment du plancher, lors de la pose du carénage. En particulier lorsque le carénage doit être glissé en translation horizontale sous le véhicule de façon à venir s'insérer ou se glisser au-dessus de pattes ou de languettes de fixation solidaires du véhicule, il devient difficile pour le monteur de poser le carénage sans qu'une telle saillie ne fasse obstacle à sa mise en place.

Pour éviter cette gêne, le monteur aura naturellement tendance à opter pour une pose du carénage suivant un mouvement de translation verticale au lieu de suivre un mouvement de translation horizontale. Or, dans un tel mouvement vertical, le carénage vient alors se fixer sous les pattes ou languettes de fixation du véhicule alors qu'une pose adéquate requiert que le carénage vienne se fixer au-dessus de ces pattes ou languettes de fixation.

Par conséquent, les systèmes de l'art antérieur proposent des solutions qui demeurent perfectibles, notamment en ce qui concerne la pose de carénages, d'éléments aérodynamiques ou autres dispositifs d'habillage pour véhicule. Il existe donc un intérêt de trouver une solution plus adéquate qui permette, au moins en partie, de résoudre les inconvénients précités.

### RÉSUMÉ DE L'INVENTION

Dans ce but, la présente invention porte sur un véhicule, de préférence un véhicule automobile, comprenant un dispositif d'habillage pour véhicule, le dispositif d'habillage comprenant :
- au moins une première interface de fixation destinée à venir se plaquer, lors d'un assemblage du dispositif d'habillage audit véhicule, contre une seconde interface de fixation solidaire du véhicule, et
- au moins une saillie de détrompage et/ou de guidage configurée :
- pour assister ledit assemblage selon un mouvement de translation du dispositif d'habillage parallèlement à un plan d'assemblage desdites interfaces de fixation, et
- pour espacer lesdites première et seconde interfaces de fixation l'une de l'autre lors d'une phase de l'assemblage dudit dispositif d'habillage au véhicule.

Avantageusement, grâce à l'agencement d'une telle saillie, le dispositif d'habillage de la présente invention permet de faciliter son montage sur un véhicule et/ou permet d'éviter des erreurs d'assemblage lors de la pose du dispositif d'habillage sur le véhicule. Les interfaces de fixation sont par exemple des languettes de fixation ou autres surfaces minces présentant deux faces principales typiquement.

Dans un premier aspect, la saillie est configurée pour engendrer un espacement à demeure desdites interfaces de fixation au terme du mouvement de translation précité.

Dans un mode de réalisation particulier ladite saillie présente une forme ampoulée qui est débouchante ou ouverte dans une partie aval de cette forme ampoulée par rapport audit mouvement de translation.

Dans un second aspect non revendiqué, ladite saillie est configurée pour engendrer un espacement temporaire desdites interfaces de fixation durant une partie du mouvement de translation.

Dans un mode de réalisation particulier de ce second aspect non revendiqué, ce dispositif d'habillage comprend en outre une zone dotée d'une surépaisseur de matière, et en ce que ladite saillie est d'épaisseur au moins égale à ladite surépaisseur de matière et constitue une rampe située au moins en partie en aval de ladite zone par rapport au mouvement de translation du dispositif d'habillage. Dans un autre mode de réalisation, ladite saillie et la surépaisseur de matière forment un arrangement qui présente un axe de symétrie orienté selon ledit mouvement de translation. Dans le cas où le dispositif d'habillage comprend plusieurs saillies, au moins une partie de ces saillies peuvent être situées de part et d'autre de la surépaisseur de matière (ou de part et d'autre de la zone comprenant cette surépaisseur de matière), par rapport audit mouvement de translation.

Dans un mode de réalisation selon l'invention, ladite saillie présente une forme de godron.

Selon l'invention, ledit dispositif d'habillage constitue un déflecteur aéraulique. Ce déflecteur aéraulique est configuré pour être agencé sous un plancher dudit véhicule. Encore selon l'invention, il est en outre configuré pour être assemblé au moins en partie à un pare-chocs, dudit véhicule, comprenant ladite seconde interface de fixation.

### BRÈVE DESCRIPTION DES FIGURES

D'autres caractéristiques et avantages de la présente invention apparaîtront plus clairement à la lecture de la description détaillée qui va suivre et qui présente différents aspects et modes de réalisation de l'invention donnés à titre d'exemples nullement limitatifs et illustrés par les figures annexées dans lesquelles :
[Fig.1] représente, dans une vue en trois dimensions, un dispositif d'habillage de l'art antérieur (au premier plan) devant venir s'assembler sur un véhicule, en particulier une partie de véhicule (en arrière-plan)
[Fig. 2a] illustre, selon une vue du profil gauche de la Fig. 1, une première manière de réaliser un assemblage inadéquat avec le dispositif d'habillage de la Fig. 1 ;
[Fig. 2b] illustre, dans une vue similaire à celle de la Fig. 1, une seconde manière de réaliser un assemblage inadéquat avec le dispositif d'habillage de la Fig. 1 ;
[Fig. 3] représente, dans une vue en trois dimensions, le dispositif d'habillage selon l'invention dans une forme de réalisation possible ;
[Fig. 4a] montre, dans un détail d'une vue similaire à celle de la Fig. 1, le résultat obtenu par le dispositif d'habillage de l'invention lors d'une tentative d'assemblage selon la première manière illustrée à la Fig. 2a ;
[Fig. 4b] montre, dans un détail d'une vue similaire à celle de la Fig. 1, le résultat obtenu par le dispositif d'habillage de l'invention lors d'une tentative d'assemblage selon la seconde manière illustrée à la Fig. 2b ;
[Fig. 5] représente, dans une vue similaire à celle de la Fig. 3, le dispositif d'habillage selon l'invention dans une autre forme de réalisation possible ;
[Fig. 6] représente un détail du dispositif d'habillage de la Fig. 1 selon un mode de réalisation connu de l'art antérieur ;
[Fig. 7] représente, dans une vue similaire à celle de la Fig. 6, le même détail du dispositif d'habillage mais dans un mode de réalisation conforme à l'invention ;
[Fig. 8a] représente l'effet technique du détail de la Fig. 7 dans une première vue ;
[Fig. 8b] représente l'effet technique du détail de la Fig. 7 dans une seconde vue ; et
[Fig. 9] est un schéma de principe des effets techniques obtenus par la présente invention.

### DESCRIPTION DÉTAILLÉE

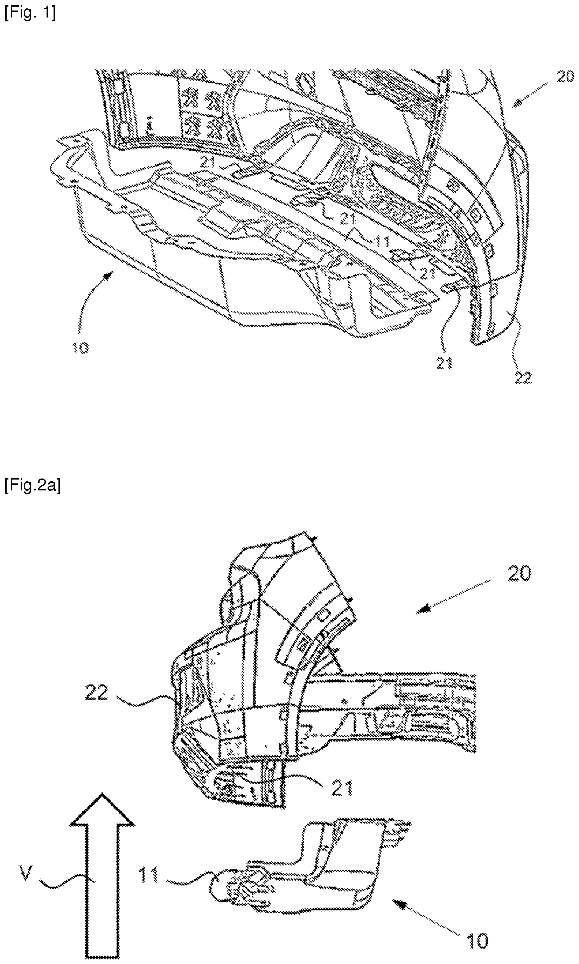

En référence à la Fig. 1, celle-ci représente un exemple de dispositif d'habillage 10 pour véhicule 20, dont seule une portion de la partie arrière de ce véhicule 20 est représentée depuis l'avant de ce dernier. Cette portion de véhicule est typiquement un pare-chocs 22 arrière et, dans ce même exemple, le dispositif d'habillage 10 est typiquement un déflecteur aéraulique destiné à prendre place sous un plancher de véhicule (non représenté), notamment sous un plancher de charge de ce véhicule. Dans un véhicule électrique, un tel plancher de charge permet notamment de recevoir les batteries du véhicule. Le déflecteur monté sous ce plancher est utile pour améliorer l'aérodynamisme du véhicule, en particulier l'écoulement du flux d'air sous le plancher, ce qui permet de réduire la consommation du véhicule et d'augmenter son autonomie. Ce déflecteur constitue un exemple de dispositif d'habillage parmi d'autres que l'on peut imaginer dans un véhicule. On comprendra donc que, bien que ce déflecteur soit pris comme exemple de dispositif d'habillage dans la présente description, le dispositif d'habille de l'invention n'est nullement limité à un tel déflecteur aéraulique.

Les dispositifs d'habillage 10 sont généralement positionnés sur le véhicule 20 à un stade quasi final de l'assemblage du véhicule et généralement après la ou les structures sur lesquelles ils viennent se fixer. Ainsi, le déflecteur d'air sous plancher de charge vient s'assembler au véhicule après la pose du pare-chocs sur lequel il est destiné à venir se fixer.

Pour permettre la fixation du dispositif d'habillage 10 au véhicule 20, le dispositif d'habillage comprend au moins une première interface de fixation 11 destinée à venir se plaquer, lors de l'assemblage du dispositif d'habillage 10 au véhicule 20, contre une seconde interface de fixation 21 solidaire du véhicule. Ainsi, au moins une première interface de fixation 11 et seconde interface de fixation 21 sont disposées en correspondance pour former une paire d'interfaces de fixation destinées à venir se plaquer l'une contre l'autre pour s'assembler, typiquement par vissage ou par tout autre moyen de fixation. Ces interfaces de fixation 11, 21 sont de préférence des languettes de fixation, des bandes, pattes, éléments en plaque ou bords minces de fixation qui présentent une relative faible épaisseur entre deux faces principales qui les constituent.

Comme illustré à la Fig. 1, le véhicule 20, en particulier le pare-chocs 22 arrière ou autre structure d'accueil du véhicule, comprend généralement une pluralité de secondes interfaces de fixation 21. Sur l'exemple de cette figure, la première interface de fixation 11 est constituée d'un rebord ou bord faisant office de bande ou de surface d'accrochage saillante pour l'ensemble des secondes interfaces 21 de fixation. En variante, il aurait été également possible de prévoir une première interface de fixation 11 pour chaque seconde interface de fixation 21. A noter que les formes et les dimensions de ces interfaces de fixation peuvent être quelconques ; les caractéristiques prépondérantes de ces interfaces étant qu'elles constituent une surface de fixation mince qui soit accessible par ses deux faces principales, raison pour laquelle ces interfaces peuvent typiquement constituer des pattes ou languettes de fixation.

De préférence, plusieurs secondes interfaces de fixation 21 sont solidaires du véhicule 20. Ces secondes interfaces de fixation 21 sont destinées à venir en correspondance d'une ou plusieurs premières interfaces de fixation 11.

L'assemblage au véhicule 20 du dispositif d'habillage 10, tel que celui illustré à la Fig. 1, peut être effectué de plusieurs manières. La première manière est celle représentée à la Fig. 2a, laquelle figure correspond à une vue de profil (en particulier du profil gauche) de la Fig. 1. Dans cette Fig. 2a le dispositif d'habillage 10 est assemblé au véhicule 20 dans un mouvement de translation de bas en haut, illustré par la flèche verticale V. Ce mouvement s'effectue jusqu'à ce que la ou les premières interfaces 11 du dispositif d'habillage 10 viennent se plaquer contre la ou les seconde interfaces 21 de fixation du véhicule 20, en l'occurrence du pare-chocs 22.

Le résultat d'un assemblage selon la Fig. 2a conduit à obtenir une disposition dans laquelle la première interface de fixation 11 du dispositif d'habillage se trouvera au-dessous de la seconde interface de fixation 21 du véhicule. Or, un tel assemblage n'est pas jugé adéquat du fait qu'il soit préférable que les interfaces de fixation les plus robustes, à savoir les seconde interfaces de fixation 21 du véhicule 20, supportent le poids du dispositif le plus léger ou le moins robuste, à savoir le dispositif d'habillage 10. En d'autres termes, un assemblage correct ou adéquat sera obtenu quand la ou les premières interfaces de fixation 11 du dispositif d'habillage 10 seront situées au-dessus de la ou des secondes interfaces de fixation 21 du véhicule et plaquée(s) contre cette/ces dernière(s).

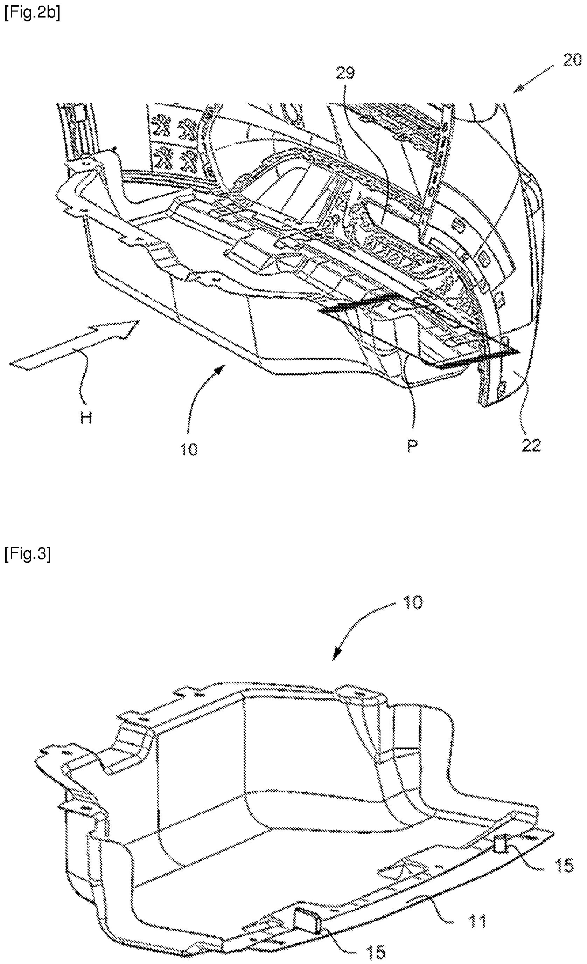

Une seconde manière de réaliser l'assemblage du dispositif d'habillage 10 au véhicule 20 est illustré à la Fig. 2b. Dans cette figure, l'assemblage s'effectue dans un mouvement de translation horizontal, ou essentiellement horizontal, illustré par la flèche H. Ce mouvement s'effectue typiquement jusqu'à ce que les première et seconde interfaces de fixation 11, 21 soient bien positionnées en face l'une de l'autre, en particulier jusqu'à ce que les trous ou moyens de fixation ménagés dans ces interfaces 11, 21 soient alignés par paires pour permettre leur assemblage.

Cependant, le résultat d'un assemblage selon la Fig. 2b peut être identique à celui de la Fig. 2a. En effet, en effectuant un mouvement de translation du dispositif d'habillage 10 dans le plan d'assemblage P des interfaces 11, 21, ou parallèlement à ce plan d'assemblage, il a souvent été constaté qu'au moins une première interface de fixation 11 du dispositif d'habillage 10 se glissait sous la seconde interface de fixation 21 correspondante du véhicule, au lieu de se glisser ou de s'insérer au-dessus de cette dernière.

Pour faire face à cette problématique, la présente invention suggère un dispositif d'habillage 10 tel que celui schématiquement représenté en exemple à la Fig. 3 selon un des modes de réalisation possibles. Plus spécifiquement, on remarquera sur cette figure que le dispositif d'habillage 10 comprend en outre au moins une saillie 15. Cette saillie 15 est une saillie de détrompage et/ou de guidage configurée d'une part pour assister l'assemblage selon un mouvement, de translation ou essentiellement de translation, du dispositif d'habillage parallèlement au plan d'assemblage P des interfaces de fixation 11, 21. Ce mouvement est le même que celui illustré à la Fig. 2b par la flèche horizontale H. D'autre part, cette saillie peut être également configurée pour espacer les première et seconde interfaces de fixation 11, 21 l'une de l'autre lors d'une phase de l'assemblage du dispositif d'habillage 10 au véhicule 20.

Sur l'exemple de la Fig. 3, deux saillies 15 sont représentées. Elles peuvent prendre diverses formes telles que des formes cylindriques ou plates telles que celles d'éléments en plaque par exemple. Bien sûr tout autre forme de saillie pourrait également convenir, notamment des formes coniques, pyramidales, cylindriques ou oblongues, des bossages, des godrons, des formes voutées, renflées, etc. qui, de plus, peuvent être encore pleines, creuses ou ouvertes c'est-à-dire débouchantes vers l'extérieur. De préférence, les saillies 15 sont de formes identiques bien que celles illustrées à la Fig. 3 ont été volontairement choisies comme étant différentes pour illustrer plus d'une forme possible.

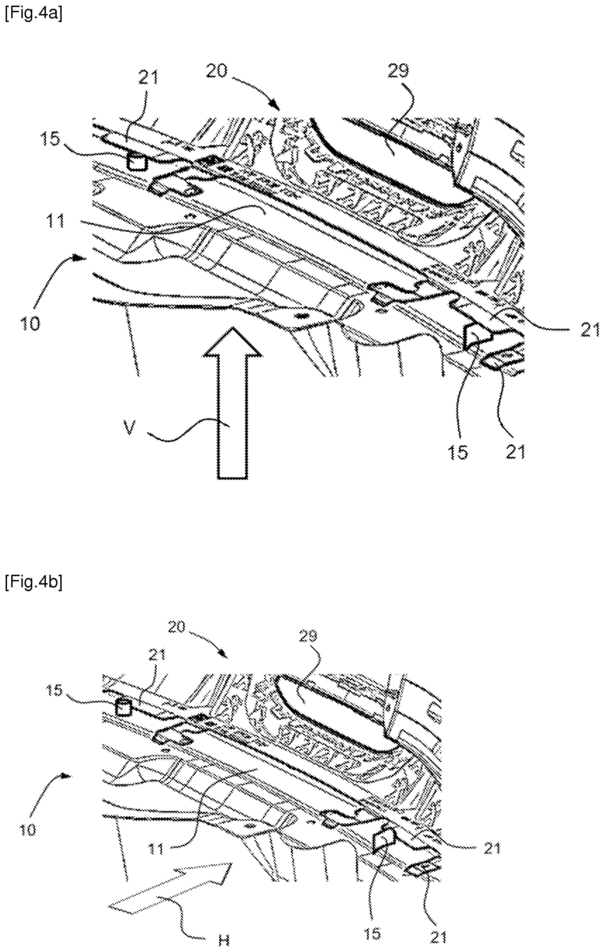

La Fig. 4a montre, dans un détail d'une vue similaire à celle de la Fig. 1, le résultat obtenu par le dispositif d'habillage 10 de l'invention lors d'une tentative d'assemblage selon la première manière illustrée à la Fig. 2a. On remarque sur la Fig. 4a qu'un assemblage du dispositif d'habillage 10 au véhicule 20 dans une direction verticale, ou sensiblement verticale selon la flèche V, est rendu impossible grâce aux saillies 15 qui, dans ce cas, font office de détrompeurs. En effet, dans pareille situation les saillies 15 sont agencées pour buter contre des éléments du véhicule, de préférence contre la ou les secondes interfaces de fixation 21 et en particulier contre la face inférieure de chaque seconde interface de fixation 21, empêchant ainsi la ou les premières interfaces de fixation 11 de venir se plaquer contre la ou les secondes interfaces de fixation 21.

Dans ce mode de réalisation, on constate donc que les saillies 15 sont configurées pour espacer les première et seconde interfaces de fixation 11, 21 l'une de l'autre lors de l'assemblage du dispositif d'habillage 10 au véhicule 20. En particulier, cet espacement (ici vertical) intervient lorsque cet assemblage est incorrect ou inadéquat. Grâce à cet espacement additionnelle, tout assemblage des interfaces 11, 21 pourra être empêché, par exemple en constatant que les vis de fixation dédiées à cet assemblage sont trop courtes.

La Fig. 4b montre, dans un détail d'une vue similaire à celle de la Fig. 1, le résultat obtenu par le dispositif d'habillage 10 de l'invention lors d'une autre tentative d'assemblage selon une seconde manière illustrée à la Fig. 2b. Avantageusement, on remarquera sur la Fig. 4b qu'un assemblage du dispositif d'habillage 10 au véhicule 20 dans une direction horizontale, ou sensiblement horizontale selon la flèche H, peut également être rendu impossible grâce à la même saillie 15 (ou aux mêmes saillies), en particulier lorsqu'il est tenté de faire correspondre les interfaces de fixation 11, 21 dans une configuration où au moins une première interface de fixation 11 viendrait en dessous d'une seconde interface de fixation 21.

Dans ce cas aussi, on constate que chaque saillie 15 joue également un rôle de détrompeur, puisqu'en venant buter contre un élément du véhicule, de préférence contre une seconde interface de fixation 21 et en particulier contre le chant amont (par rapport au mouvement de translation illustré par la flèche H) de cet élément de véhicule ou de cette seconde interface de fixation 21, elle empêche les première et seconde interfaces de fixation de venir se plaquer l'une contre l'autre. Plus précisément, elle empêche, par un espacement (ici horizontal) des première et seconde interfaces de fixation 11, 21, de faire correspondre leurs moyens de fixation pour pouvoir les assembler.

Dans un premier aspect de l'invention illustré conformément aux Fig. 4a et 4b, on constate que la ou chaque saillie 15 peut être configurée pour engendrer un espacement à demeure des interfaces de fixation 11, 21 au terme du mouvement de translation appliqué au dispositif d'habillage 10. Que ce mouvement soit vertical (conformément à la flèche V) ou horizontal (conformément à la flèche H), la saillie 15 permet d'empêcher la mise en concordance des première et seconde interfaces de fixation 11, 21 lorsque l'assemblage se fait d'une manière incorrecte ou inadéquate. L'empêchement de cette mise en concordance des interfaces est obtenu par l'espacement précité qui peut empêcher le rapprochement des interfaces dans un sens vertical (Fig. 4a) ou horizontal (Fig. 4b). On précisera encore que cet espacement ou décalage est définit comme étant permanent à la fin du mouvement de translation, en ce sens que sans revenir en arrière dans ce mouvement, cet espacement ou décalage demeure au terme de ce mouvement.

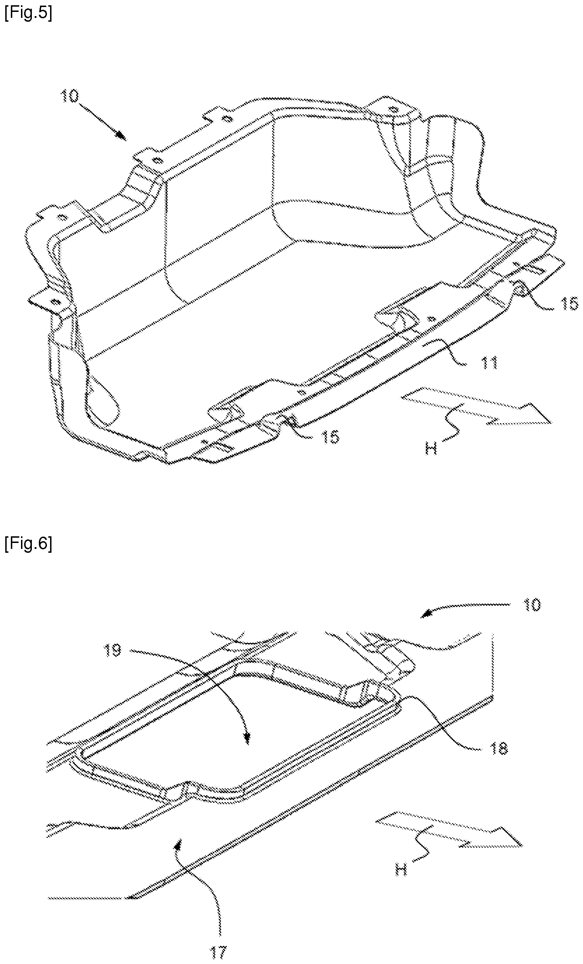

La Fig. 5 représente un mode de réalisation préféré du dispositif d'habillage 10 de l'invention, plus particulièrement de la saillie 15 dans une utilisation comme saillie de détrompage. Dans ce mode de réalisation, la saillie 15 présente une forme ampoulée débouchante ou ouverte, à savoir non borgne, dans une partie aval de cette forme. De manière générale, il est à noter que les termes amont et aval font référence au mouvement de translation selon la flèche horizontale H, c'est-à-dire au mouvement de translation s'effectuant parallèlement au plan d'assemblage P des interfaces de fixation 11, 21. Ainsi, la flèche H indique une direction allant de l'amont vers l'aval.

Avantageusement, la forme débouchante ou ouverte des saillies 15 telles qu'illustrée à la Fig. 5 permet, au monteur qui se trouve en dessous du dispositif d'habillage 10 lors de son assemblage, de voir vers l'aval à travers chacune de ces saillies. Ainsi, dans le cas où une d'elles buterait par exemple contre le chant amont d'une seconde interface de fixation 21 du véhicule ou de tout autre élément du véhicule, le monteur situé en dessous du dispositif d'habillage 10 pourrait voir l'élément, en l'occurrence le chant, qui fait obstacle à l'assemblage du dispositif d'habillage. Avantageusement, cela permet d'obtenir une meilleure compréhension du blocage qui empêche l'assemblage du dispositif d'habillage au véhicule, et de rapidement se rendre compte que l'assemblage est, dans une telle situation, incorrect ou inadéquat.

De préférence encore, les saillies 15, en particulier celles dédiées plus spécifiquement à agir comme détrompeurs, sont agencées ou configurées sur le dispositif d'habillage 10 pour être en vis-à-vis des secondes interfaces de fixation 21 lorsque ce dispositif d'habillage est présenté en une position pour être assemblé au véhicule. En d'autres termes, ces saillies 15 sont agencées dans l'alignement des premières ou secondes interfaces de fixation. De préférence, elles sont agencées au moins en partie en aval de chaque première interface de fixation, de préférence encore sur une des faces d'une telle première interface de fixation 11 et en particulier sur la face opposée à celle qui doit venir se plaquer contre la seconde interface de fixation 21 correspondante du véhicule. Ces configurations préférentielles peuvent être mises en oeuvre quel que soit le nombre de saillies, à savoir qu'il y en ait qu'une ou plusieurs.

Dans un second aspect de l'invention, la saillie 15 peut être configurée pour engendrer un espacement temporaire des première et seconde interfaces de fixation 11, 21. Cela signifie que les première et seconde interfaces de fixation 11, 21 sont espacées par la saillie seulement durant une partie du mouvement de translation et, en particulier, qu'au terme de ce mouvement ces interfaces de fixation ne sont plus espacées par cette même saillie. L'utilité de cette caractéristique particulière sera mieux comprise avec le mode de réalisation qui est expliqué ci-dessous.

Dans un mode de réalisation, le dispositif d'habillage 10 comprend en outre une zone 17 dotée d'une surépaisseur de matière 18, comme représenté en exemple sur le détail de la Fig. 6. Cette surépaisseur de matière est susceptible d'entraver l'assemblage du dispositif d'habillage au véhicule. Typiquement et comme représenté sur cette figure, cette surépaisseur de matière peut être un renfort bordant une ouverture 19 ménagée dans le dispositif d'habillage 10 pour pouvoir bénéficier d'un accès à une certaine partie de la voiture sans devoir retirer le dispositif d'habillage. Dans le présent exemple de la Fig. 6, l'ouverture 19 a pour but d'accéder à un feu antibrouillard 29 qui est installé dans le véhicule, en particulier dans le pare-chocs 22 arrière de ce véhicule (voir Fig. 4b par exemple). Cette ouverture 19 permet par exemple d'accéder facilement à l'ampoule du feu antibrouillard, par exemple pour son remplacement. La surépaisseur de matière 18 constitue un rebord ou un bord tombé qui rigidifie l'ouverture 19. Sans un tel bord tombé, la zone 17 du dispositif d'habillage serait fragilisée par l'ouverture 19. Cette dernière accroît en effet la souplesse de cette zone, au risque de se déformer, voire de se déchirer, en particulier lorsque le dispositif d'habillage est en plastique comme c'est souvent le cas. Pour des raisons d'aérodynamisme, ce bord tombé est ménagé sur la face interne du dispositif d'habillage, à savoir sur la face se trouvant en vis-à-vis du plancher du véhicule. L'inconvénient de ce bord tombé ou surépaisseur de matière 18 réside dans le fait qu'il constitue un obstacle lors de l'assemblage du dispositif d'habillage au véhicule, notamment selon le mouvement de translation illustré par la flèche H de la Fig. 6 ou de tout autre figure.

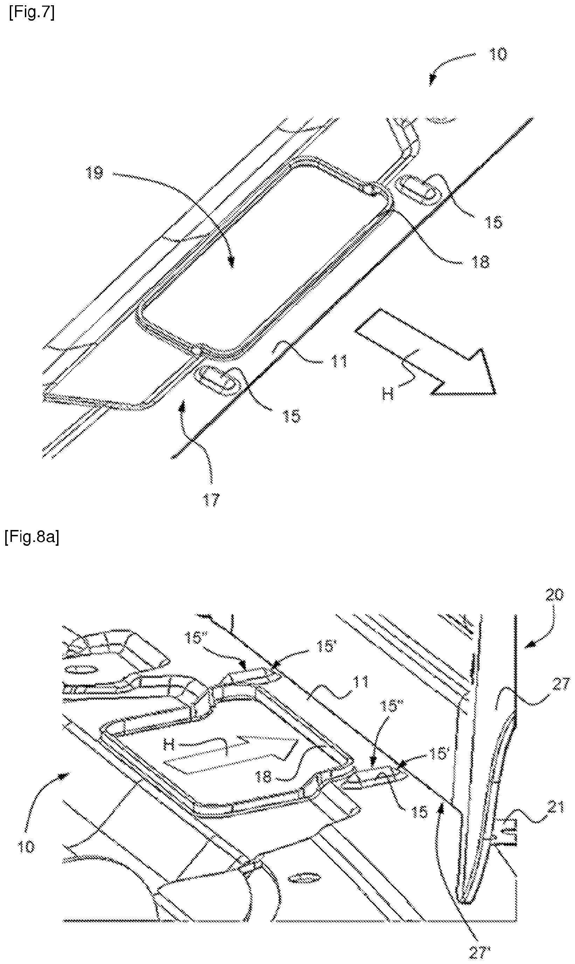

Or, grâce à ladite au moins une saillie 15 qui équipe le dispositif d'habillage de la présente invention, cet inconvénient peut être surmonté comme illustré à la Fig. 7. De préférence chaque saillie 15 est d'épaisseur au moins égale à la surépaisseur de matière 18, à savoir à l'épaisseur du bord tombé qui borde l'ouverture 19. En outre, la ou les saillies 15 constituent une rampe située, au moins en partie, en aval (c'est-à-dire au-devant) de la zone 17, ou du moins de la surépaisseur 18, par rapport au mouvement de translation représenté par la flèche H.

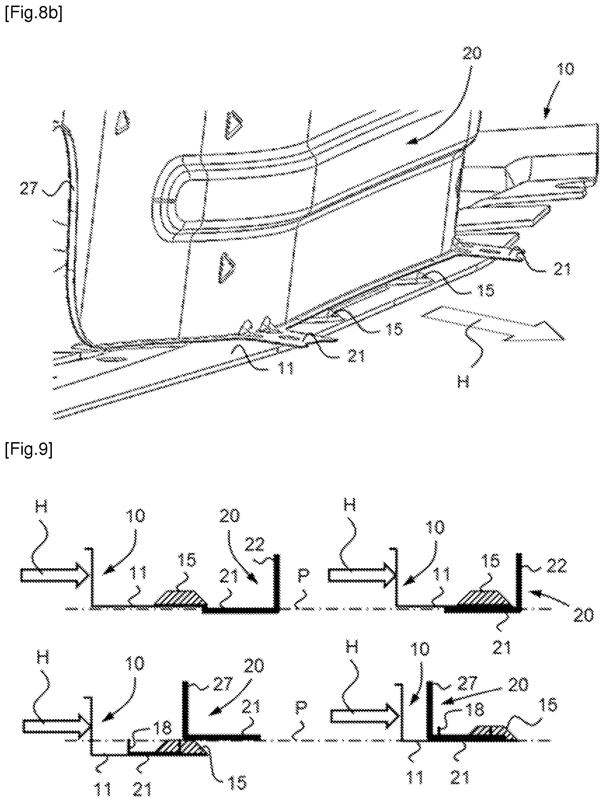

L'effet technique produit par cette ou ces saillies 15 est illustré par les Fig. 8a et 8b qui montrent la zone 17 lors de l'assemblage du dispositif d'habillage 10 au véhicule 20 dans une vue orientée plutôt vers l'aval, respectivement vers l'amont (par rapport au mouvement de translation précité). Dans ces figures est également représenté un panneau arrière 27 qui constitue un premier obstacle situé en amont du pare-chocs 22 arrière (non représenté sur ces figures). Grâce aux saillies 15, le dispositif d'habillage sera, dans son mouvement de translation selon la flèche H, guidé ou dirigé sous le bord du panneau arrière 27. Dans ce mouvement, le chant 27' du panneau arrière va prendre appui sur les saillies, d'abord le long de la rampe 15' de ces saillies jusqu'à venir sur le dos 15" de ces dernières à une hauteur au moins égale à celle de la surépaisseur de matière 18 (Fig. 8b), avant de venir glisser sur cette surépaisseur de matière et finalement de retomber derrière cette surépaisseur au terme ou juste avant le terme de ce mouvement de translation. Ainsi, en appliquant au dispositif d'habillage 10 une force suivant un mouvement de translation parallèlement au plan d'assemblage P des première et seconde interfaces de fixation 11, 21, l'obstacle formé par la surépaisseur de matière 18 va pouvoir être passé sans encombre grâce aux saillies 15 qui équipent le dispositif d'habillage de la présente invention. A noter que, comme représenté sur la Fig. 8b, le panneau arrière 27 peut également comporter des secondes interfaces de fixation 21 destinées à venir se plaquer contre la ou les premières interfaces de fixation 11 du dispositif d'habillage 10.

De préférence encore et comme illustré à la Fig. 7, les saillies 15 sont en outre situées de part et d'autre de la zone 17 par rapport au mouvement de translation représenté par la flèche H. Dans le cas où une seule saillie 15 équiperait le dispositif d'habillage, cette dernière serait agencée en aval (c'est-à-dire au-devant) de la zone 17, ou du moins de la surépaisseur 18, par rapport au mouvement de translation représenté par la flèche H. Dans un mode de réalisation, ladite au moins une saillie 15 et la surépaisseur de matière 18 forment un arrangement qui présente un axe de symétrie orienté selon ledit mouvement de translation illustré à la Fig. 7 par la flèche H.

Dans ce second aspect et quel que soit le mode de réalisation de ce second aspect, on remarquera que la saillie 15 joue plutôt un rôle de guidage qui permet d'assister l'assemblage du dispositif d'habillage au véhicule, notamment en facilitant sa mise en place par une déflection temporaire du dispositif d'habillage lors du mouvement de translation qui est appliqué à ce dispositif. Cependant, la saillie 15 demeure configurée pour espacer les première et seconde interfaces de fixation 11, 21 l'une de l'autre lors de l'assemblage du dispositif d'habillage 10 au véhicule 20.

Quel que soit l'aspect de la présente invention, la saillie peut en outre présenter une forme de godron qui rappelle celle d'une gousse ou d'un ove allongé.

La figure 9 illustre, par un schéma de principe, les effets techniques obtenus par l'invention, en particulier par le premier et le second aspect de cette invention. Cette figure représente un premier effet technique dans un premier scénario illustré dans la moitié supérieure de cette figure, et un second effet technique dans un second scénario illustré dans sa moitié inférieure. Chaque scénario est illustré dans un premier état, à gauche de la figure, et dans un état final, à droite de cette figure. Le passage du premier état à l'état final se faisant conformément au mouvement de translation qui est appliqué au dispositif d'habillage 10 et qui est représenté par les flèches H. Les premier et second scénarios correspondent respectivement au premier et second aspects de l'invention.

Sur cette Fig. 9, on reconnait le dispositif d'habillage 10 et le véhicule qui, dans le premier scénario est représenté par son pare-chocs 22, et dans le second scénario est représenté par son panneau arrière 27. Dans sa partie horizontale, le dispositif d'habillage 10 comprend une première interface de fixation 11 et une saille 15. Le pare-chocs 22 et le panneau arrière 27 disposent également, dans leur partie horizontale, d'une interface de fixation qui correspond à la seconde interface de fixation 21 du véhicule. Le plan d'assemblage P des interfaces 11, 21 y est également représenté.

En référence au premier scénario, on remarque que le dispositif d'habillage 10 ne peut être assemblé que d'une manière possible au pare-chocs 22 pour que les première et seconde interfaces de fixation 11, 21 soient plaquées l'une contre l'autre au terme du mouvement de translation. En effet selon cette représentation, il faut que la première interface de fixation 11 du dispositif d'habillage se glisse sur la seconde interface de fixation 21 du pare-chocs 22. Dans le cas contraire, la saillie 15 engendrera, au terme du mouvement de translation, un espacement permanent entre les premières et seconde interfaces de fixation. Cet espacement empêchera ces interfaces de venir se plaquer l'une contre l'autre en signalant ainsi un assemblage incorrect ou inadéquat.

En référence au second scénario, on reconnait la surépaisseur de matière 18 qui borde l'ouverture ménagée dans le dispositif d'habillage 10. On remarque également l'effet de la saillie 15 qui permet d'engendrer un espacement temporaire des première et seconde interfaces de fixation 11, 21, le temps que le chant inférieur (27') du panneau arrière 27 ait totalement passé l'obstacle formé par la surépaisseur de matière 18. Ainsi, cet espacement ne perdurera que durant une partie du mouvement de translation représenté par la flèche H, car au terme de ce mouvement les interfaces de fixation 11, 22 pourront être plaquées l'une contre l'autre conformément à l'assemblage attendu.

Il est à noter encore que l'ensemble dispositif d'habillage 10 et pare-chocs 22 peut être fixé au panneau arrière 27 au moyen des mêmes interfaces de fixation 11, 21.

Dans un mode de réalisation préféré, le dispositif d'habillage 10 constitue un déflecteur, en particulier un déflecteur aéraulique qui, de préférence, est configuré pour être agencé sous le véhicule, en particulier sous le plancher de ce véhicule. De préférence encore, ce déflecteur est en outre configuré pour être assemblé au moins en partie au pare-chocs 22 du véhicule, lequel pare-chocs comprend au moins une seconde interface de fixation 21.

La présente invention a également pour objet un véhicule, de préférence un véhicule automobile, comprenant un dispositif d'habillage selon l'un quelconque des aspects et modes de réalisation décrits ou suggérés dans la présente description.

Bien que les objets ou les aspects de la présente invention aient été décrits en référence à des exemples spécifiques, diverses modifications et/ou améliorations évidentes pourraient être apportées aux modes de réalisation décrits sans s'écarter de l'invention, qui est uniquement définie par les revendications ci-jointes.

## Revendications

1. Véhicule (20) comprenant un dispositif d'habillage (10) formant un déflecteur aéraulique sous un plancher dudit véhicule (20) et comportant une première interface de fixation (11), un parechocs (22) solidaire au véhicule (20) comportant une deuxième interface de fixation (21), le dispositif d'habillage (10) comprenant au moins une saillie (15) de détrompage et/ou de guidage configurée pour assister ledit assemblage, selon un mouvement de translation (H) du dispositif d'habillage (10) parallèlement à un plan d'assemblage (P) desdites interfaces de fixation (11, 21), et pour espacer lesdites première et seconde interfaces de fixation (11, 21) l'une de l'autre lors d'une phase de l'assemblage dudit dispositif d'habillage (10) au véhicule (20), **caractérisé en ce que** la première interface de fixation (11) est disposée au-dessus de la seconde interface de fixation (21) dans le référentiel du véhicule (20), et **en ce que** la saillie (15) s'étend au-dessus de la première interface de fixation (11).

2. Véhicule (20) selon la revendication 1, **caractérisé en ce que** ladite saillie (15) est configurée pour engendrer un espacement à demeure desdits interfaces de fixation (11, 21) en un terme dudit mouvement de translation (H) si la première interface de fixation (11) est sous la deuxième interface de fixation (22).

3. Véhicule selon la revendication 2, **caractérisé en ce que** ladite saillie (15) présente une forme ampoulée qui est débouchante ou ouverte dans une partie aval de ladite forme ampoulée par rapport audit mouvement de translation (H).

4. Véhicule (20) selon l'une des revendications précédentes, **caractérisée en ce que** ladite saillie présente une forme de godron.

## Patentansprüche

1. Fahrzeug (20) mit einer Verkleidungseinrichtung (10), die unter einem Boden des Fahrzeugs (20) einen Luftleitkörper bildet und eine erste Befestigungsschnittstelle (11) aufweist, wobei eine fahrzeugfeste Verkleidung (22) eine zweite Befestigungsschnittstelle (21) aufweist, wobei die Verkleidungseinrichtung (10) mindestens einen Vorsprung aufweist (15) zur Sicherung und/oder Führung der Anordnung in einer Translationsbewegung (H) der Verkleidung (10) parallel zu einer Montageebene (P) der Befestigungsschnittstellen (11, 21) und zur Beabstandung der ersten und zweiten Befestigungsschnittstellen (11, 21) in einer Phase der Montage Verbindung der Verkleidung (10) mit dem Fahrzeug (20), **dadurch gekennzeichnet, dass** die erste Befestigungsschnittstelle (11) über der zweiten Befestigungsschnittstelle (21) in der Fahrzeugbezugsebene (20) angeordnet ist und dass sich der Vorsprung (15) über die erste Befestigungsschnittstelle (11) erstreckt.

2. Fahrzeug (20) nach Anspruch 1, **dadurch gekennzeichnet, dass** der Vorsprung (15) so konfiguriert ist, dass er einen festen Abstand der Befestigungsschnittstellen (11, 21) innerhalb eines Endes der Translationsbewegung (H) erzeugt, wenn die erste Befestigungsschnittstelle (11) unter der zweiten Befestigungsschnittstelle (22) liegt.

3. Fahrzeug nach Anspruch 2, **dadurch gekennzeichnet, dass** der Vorsprung (15) eine geformte Form aufweist, die in einem stromabwärtigen Abschnitt der geformten Form bezüglich der Translationsbewegung (H) mündet oder offen ist.

4. Fahrzeug (20) nach einem der vorhergehenden Ansprüche, **dadurch gekennzeichnet, dass** der Vorsprung eine Teerform aufweist.

## Claims

1. Vehicle (20) consisting of a covering device (10) forming an aerial deflector under a floor of the said vehicle (20) and having an initial attachment interface (11), a parechocs (22) joining the vehicle (20) comprising a second attachment interface (21), the covering device (10) including the less a projection (15) of deflection and/or guidance configured to assist the said assembly, according to a movement of translation (H) of the dressing device (10) parallel to an assembly plane (P) of the said fixing interfaces (11, 21), and to spaced the said first and second fixing interfaces (11, 21) each other during a phase of the assembly of the said fitting device (10) to the vehicle (20), **characterized by** the fact that the first fixing interface (11) is placed above the second fixing interface (21) in the vehicle repository (20), and that the protruding (15) extends over the first fixing interface (11).

2. Vehicle (20) according to Claim 1, characterized that the said projection (15) is configured to create a permanent separation of the said fixing interfaces (11, 21) in a term of the said translation motion (H) if the first fixing interface (11) is under the second fixing interface (22).

3. A vehicle according to Claim 2, **characterized in that** the said projection (15) has an ampulous shape which is open or unfurling in a downstream part of the said ampulous shape in relation to that translation movement (H).

4. Vehicle (20) according to one of the previous claims, characterized as the said protruding has a form of dron.
